# EUROPEAN PATENT SPECIFICATION

(11) **EP 2 977 143 B1**
(45) Date of publication and mention of the grant of the patent: **14.12.2016**
(21) Application number: 15425040.1
(22) Date of filing: 03.06.2015
(51) Int. Cl.: B23P 15/24, B44B 5/02, B21J 13/02, B21J 13/03, B21K 31/00, B21K 5/20

(54) **METHOD FOR REALIZING SHAPED WORKING DIES FOR COINING COINS**
VERFAHREN ZUM REALISIEREN VON ARBEITSWERKZEUGE FÜR DAS PRÄGEN VON MÜNZEN
PROCÉDÉ DE RÉALISATION DE MATRICE FORMÉ POUR LA PRODUCTION DES PIECES DE MONNAIE

(30) Priority: 23.07.2014 IT RM20140413
(43) Date of publication of application: 27.01.2016
(73) Proprietor: Istituto Poligrafico e Zecca dello Stato S.p.A., 00138 Roma (RM) (IT)
(72) Inventor: Carlozzi, Giovanni, 00138 Roma (IT); Mascioli, Paolo, 00138 Roma (IT)
(74) Representative: Perronace, Andrea

(56) References cited:
- EP-A2- 1 274 593
- WO-A2-2014/016593

## Description

The present invention relates to a method for for realizing shaped working dies for coining coins.

More precisely, the present invention relates to a method that uses references on the working punch a coupling element between working die and chuck of the CNC lathe in order to obtain a register turning of the working die and obtain shapings such to produce coins with lateral shapings.

### State of the art

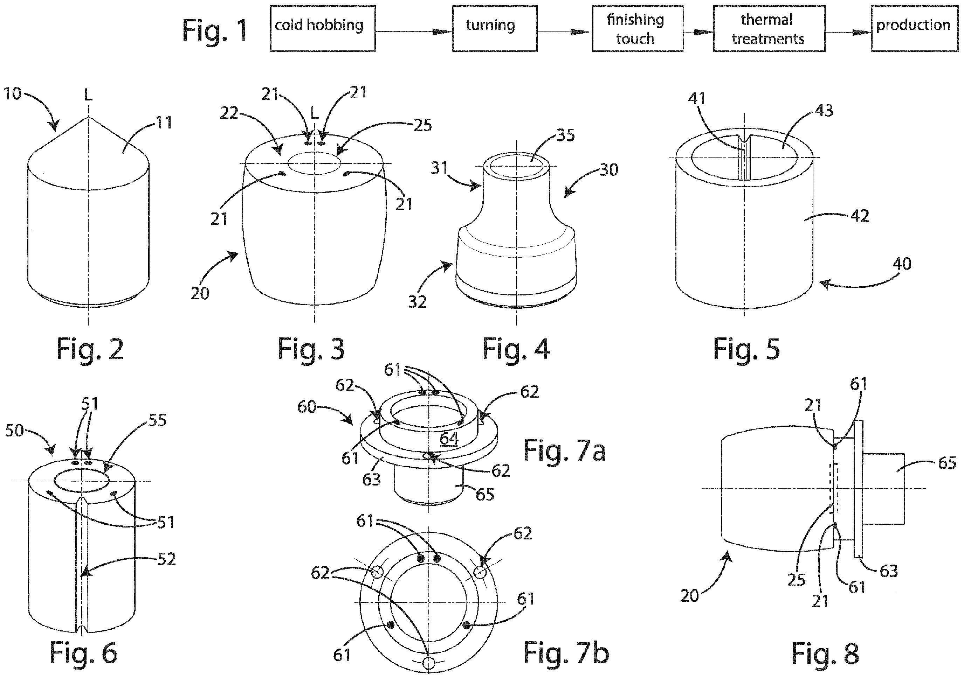

In the state of the art, the production of cones (utensils intended for striking) is based on a process, which consists essentially of the steps indicated in Figure 1.

In particular, with reference to Figure 2, a preliminary step involves the construction of a so-called steel "tip" 10, having a form of a base cylinder and one end having the shape of a cone or of a truncated cone, obtained by means of a turning operation. The angle at the vertex of the steel "tip" can vary in function of the reliefs and of the complexity of the effigy to reproduce.

In a first step, the creation of the effigy is provided (in negative) on the "tip", performed by means of the working punch on the body of the steel "tip" by the operation of cold hobbing using a hydraulic/mechanical press.

With reference to Figure 3, once the hobbing occurred, the "tip" will be deformed taking on the so-called "barrel" form 20 with the effigy 25 in negative (the elements 21 do not relate to the known technique, but are specific to the invention).

With reference to Figure 4, the second turning step is realized on the barrel shape 20 to obtain a coining 30 which shows the effigy 35 in negative (the effigy 35 is in fact the effigy 25, without the references on the contour). They differ in the die an upper part 31 with an upper face 35 bearing the effigy, and a lower part 32.

In the case where there is the need to perform additional processing, such as register shapings on the circumference of the die (for example spanish flowers of 20 cents), these are traditionally performed with the help of the CNC lathe in a classic turning operation and the miller for the shapings. In the case in which there is the need to perform additional processing, such as shapings on the circumference of the die (for example spanish flowers of 20 cents), these are carried out with the help of the CNC lathe with at least three axes of movement, also allowing the milling operation.

Subsequently, the turned cones must be retouched by engravers, and heat treated to endow the steel with heart toughness and a surface hardness that can withstand the dynamic stresses impressed by a mechanical or a hydraulic press.

The Applicant has also filed the patent application EP14163962.5 concerning a method for varying the curvature of the cones which uses the spring effect of the steels themselves contained in a ferrule, which, however, concerns only the step of cold hobbing.

The turning step remains problematic when register shapings have to be performed on the circumference of the die, because the required accuracy is high and the effigy must be precisely in registry with the shapings.

WO2014/016593 discloses a method of manufacturing a coining die.

The object of the present invention is to provide a method of realization of the cones which solves the problems and overcomes the drawbacks of the prior art.

It is subject matter of the present invention a method for realizing shaped working dies for coining coins with an effigy, comprising the use of a working die to be formed presenting a main extension direction and a face substantially perpendicular to said main extension direction, as well as a working punch in the form of a cylinder wherein a base of the cylinder presents centrally positive effigy reliefs to be punched on said face, the method being characterized in that the following subsequent steps are executed:
- providing said working punch with:
   ∘ a plurality of negative reference reliefs outside said positive effigy reliefs on said a base;
   ∘ at least a groove along at least a portion of generating line of the cylinder;
- cold hobbing said working die to be formed by making slide said working punch inside a holding sleeve provided with at least an internal tooth whereon said at least a groove correspondingly slides, thus obtaining a barrel-shaped working die to be formed with a corresponding face presenting a negative effigy and corresponding positive reference reliefs;
- fixing to a chuck of a CNC lathe a coupling element, which presents a first portion that can be coupled to the chuck and a second portion with a surface presenting a plurality of negative reference reliefs corresponding to said plurality of positive reference reliefs;
- coupling to said coupling element said barrel-shaped working die to be formed by coupling the positive reference reliefs of said barrel-shaped working die to be formed to the negative reference reliefs of the coupling element;
- fixing said barrel-shaped working die by movable clamps of the chuck;
- lathing said barrel-shaped working die to be formed along a portion starting from an end opposed to said corresponding face;
- coupling said end of the barrel-shaped working die to be formed opposed to said corresponding face to a counter-chuck of the CNC lathe and de-couple said barrel-shaped working die from said coupling element and from the chuck;
- lathing and subsequently milling the barrel-shaped working die to be formed along a portion starting from said corresponding face;
   so as to obtain a shaped working die suitable to be used for the coining of coins.

According to a realization aspect of the present invention, said at least a coupling element is fixed by screws to said chuck through holes provided on said coupling element.

According to a realization aspect of the present invention, said negative reference reliefs are disposed in correspondence of three positions at 120° to each other.

According to a realization aspect of the present invention, in two of said three positions there is an only one reference, whilst in a third position there are two references in such a way to define an orientation of the corresponding effigy.

According to a realization aspect of the present invention, said first portion of the coupling element comprises a first end insertable into a central hole of the chuck, and a collar fixable by screws to the chuck.

It is further subject-matter of the present invention a punching assembly of a working die to be formed, characterized in that it comprises:
- a working punch in the form of a cylinder, wherein:
   ∘ a base of the cylinder presents centrally positive effigy reliefs,
   ∘ a plurality of negative reference reliefs is provided outside said positive effigy reliefs on said base;
   ∘ at least a groove is provided along at least a portion of generating line of the cylinder;
- a holding sleeve provided with at least an internal tooth suitable to be slidably coupled with said at least a groove.

It is further subject-matter of the present invention a coupling element for chuck and a barrel-shaped working die to be formed, characterized in that it presents a first portion and a second portion that has an edge on which references are provided in negative, corresponding to the references in positive on the barrel-shaped working die.

According to a realization aspect of the present invention, said first portion of the coupling element comprises a first end insertable into a central hole of a chuck, and a collar with holes through which screws are insertable for the fixing to said chuck.

The invention will be now described, for illustrative but not limitative, with particular reference to the drawings of the accompanying figures, in which:
- Figure 1 shows a flow diagram that illustrates the various steps for the production of a die;
- Figure 2 shows the tip which must be hobbed according to the first step of the method according to the invention;
- Figure 3 shows the tip of Figure 2 after the hobbing with the working punch;
- Figure 4 shows the semifinished of Figure 3 which has been subjected to a turning operation according to the invention;
- Figure 5 shows the ring or retaining sleeve of the working punch, according to the invention;
- Figure 6 shows the working punch according to the present invention;
- Figure 7a shows a perspective view of a coupling element between the spindle nose and the semifinished of Figure 3 for turning according to the present invention;
- Figure 7b shows a top view of the coupling element of Figure 7a;
- Figure 8 shows the coupling between the semifinished of Figure 3 and the coupling element of Figure 7a and 7b;
- Figure 9 shows in greater detail the coupling between the semifinished of Figure 3 and the coupling element of Figures 7a and 7b.

### Detailed description of embodiments of the invention

A method has been devided to enable the realization of shapings on the circumference of the die according to the technical specifications Euro in registry with the effigy provided on its surface, by synchronizing the operations of cold hobbing and CNC turning.

In reference to Figure 6, this method involves the construction, at the outside of the effigy 55 on the working punch 50, of reference points (reliefs in general) 51 (in negative). References are preferably placed in three positions at about 120° from each other. Preferably in one of these positions the reference is double, so as to define an orientation of the effigy.

Furthermore, the working punch 50 must be modified so that it has a groove 52 (in negative) along the generatrix of the cylinder that constitutes it.

In reference also to Figure 5, there is provided a containment ring (or "sleeve") 40 of the working punch. This containment ring has a cylindrical shape and has a tooth 41 corresponding to the groove 52 of the working punch. The tooth 41 is cantilevered with respect to the inner face 43 of the containment ring, opposite to the outer face 42.

In operation, the working punch 50 slides in the retaining sleeve 40 so that the tooth 41 slides into the groove 52.

With the cold hobbing of tip 10, positive references 21 on the barrel element 20 are obtained (reliefs in general or reference points), around effigy 25.

At this point, the barrel element 20 is positioned on the lathe.

To do this, with reference to Figures 7a and 7b, a coupling element 60 between the spindle nose (not shown) and the barrel element 20 is used. The coupling element, also teremed "shot galss", has a cylindrical end 65 which is inserted in a central hole of the spindle and an opposite end 64 that has an edge on which references 61 are provided in negative, corresponding to the references in positive 21. Between the two ends, a circular collar 63 is provided that has holes 62 for optional fixing to the spindle by screws (not shown).

The barrel element 20 is coupled in Figure 8 to the coupling element 60 so that the references of both 21, 61 are positioned in a corresponding manner.

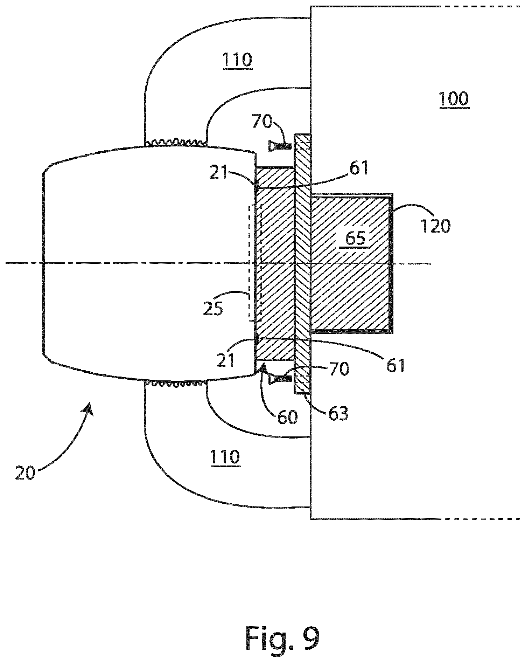

Figure 9 specifies the fixing of the coupling element 60 to the spindle nose 100 of the lathe.

The coupling member 60 is inserted in the central cavity 120 of the spindle nose 100. The coupling member 60 is fixed to the spindle nose by means of screws 70 which pass through the holes 62 and are inserted in the spindle nose 100.

The spindle nose has two clamps 110 that are tight on the body of the barrel 20 to the barrel so as to fix the latter to the coupling element 60 so that the references 61 are corresponding to the references 51 of the barrel element, and the effigy 25 is closed between the two elements.

In this position, the barrel element is machined by the CNC lathe in the "lower" part, i.e. the part close to the base opposite to the base 25 containing the effigy, so as to obtain a shaped part 32 of the die. Subsequently, the counter-spindle (not shown) is synchronized at the same speed of rotation of the spindle and, upon approaching, engages the machined end. At this point, the spindle loosens the grippers 110, so that the working die 20 comes off from the coupling element 60, and the CNC machining of the end which contains the effigy 25 is possible, obtaining a turned end 31. The positive references are eliminated, leaving only positive references in the final effigy 35 on the die 30.

With the invention method, in the step of turning on the spindle, the base of the working die is prepared while on the counter-spindle, positioned in registry with the spindle, the turning of both the collar and the milling of the shapings, e.g. the spanish flower of 20c, are carried out, which are spaced apart along the outer circumference of the die, resulting automatically in registry with the effigy shown on its surface.

The centering system both at the time of cold hobbing between the working punch and retaining sleeve and synchronization during CNC turning ensures exact repeatability not only of the turning operations but also milling operations of the dies with the advantage of easily realizing dies which are shaped along the outer circumference, with shapes perfectly in registry with respect to the effigy on the surface.

In the foregoing, preferred embodiments have been described and variation of the present invention have been suggested, but it is to be understood that those skilled in the art can make other variations and changes, without so departing from the relevant scope of protection, as defined by the attached claims.

## Claims

1. Method for realizing shaped working dies (30) for coining coins with an effigy (35), comprising the use of a working die (10) to be formed presenting a main extension direction (L) and a face (11) substantially perpendicular to said main extension direction (L), as well as a working punch (50) in the form of a cylinder wherein a base of the cylinder presents centrally positive effigy reliefs (55) to be punched on said face (11), the method being **characterized in that** the following subsequent steps are executed:
- providing said working punch (50) with:
∘ a plurality of negative reference reliefs (51) outside said positive effigy reliefs (55) on said a base;
∘ at least a groove (52) along at least a portion of generating line of the cylinder;
- cold hobbing said working die (10) to be formed by making slide said working punch (50) inside a holding sleeve (40) provided with at least an internal tooth (41) whereon said at least a groove (52) correspondingly slides, thus obtaining a barrel-shaped working die (20) to be formed with a corresponding face (22) presenting a negative effigy (25) and corresponding positive reference reliefs (21);
- fixing to a chuck (100) of a CNC lathe a coupling element (60), which presents a first portion (63,65) that can be coupled to the chuck (100) and a second portion with a surface presenting a plurality of negative reference reliefs (61) corresponding to said plurality of positive reference reliefs (21);
- coupling to said coupling element (60) said barrel-shaped working die (20) to be formed by coupling the positive reference reliefs (21) of said barrel-shaped working die (20) to be formed to the negative reference reliefs (61) of the coupling element (60);
- fixing said barrel-shaped working die by movable clamps of the chuck (100);
- lathing said barrel-shaped working die (20) to be formed along a portion starting from an end opposed to said corresponding face (22);
- coupling said end of the barrel-shaped working die (20) to be formed opposed to said corresponding face (22) to a counter-chuck of the CNC lathe and de-couple said barrel-shaped working die (20) from said coupling element (60) and from the chuck (100);
- lathing and subsequently milling the barrel-shaped working die (20) to be formed along a portion starting from said corresponding face (22); so as to obtain a shaped working die (30) suitable to be used for the coining of coins.

2. Method according to claim 1, **characterized in that** said at least a coupling element (60) is fixed by screws (70) to said chuck (100) through holes (62) provided on said coupling element (60).

3. Method according to claim 1 or 2, **characterized in that** said negative reference reliefs (51) are disposed in correspondence of three positions at 120° to each other.

4. Method according to claim 3, **characterized in that** in two of said three positions there is an only one reference (21), whilst in a third position there are two references (21) in such a way to define an orientation of the corresponding effigy (25).

5. Method according to any claim 1 to 4, **characterized in that** said first portion (63, 65) of the coupling element (60) comprises a first end (65) insertable into a central hole (120) of the chuck (100), and a collar (63) fixable by screws (70) to the chuck (100).

6. Punching assembly of a working die to be formed, **characterized in that** it comprises:
- a working punch (50) in the form of a cylinder, wherein:
∘ a base of the cylinder presents centrally positive effigy reliefs (55),
∘ a plurality of negative reference reliefs (51) is provided outside said positive effigy reliefs (55) on said base;
∘ at least a groove (52) is provided along at least a portion of generating line of the cylinder;
- a holding sleeve (40) provided with at least an internal tooth (41) suitable to be slidably coupled with said at least a groove (52).

7. Coupling element (60) for chuck (100) and a barrel-shaped working die (20) to be formed, **characterized in that** it presents a first portion (63, 65) and a second portion (64) that has an edge on which references (61) are provided in negative, corresponding to the references in positive (21) on the barrel-shaped working die of claim 1.

8. Coupling element according to claim 7, **characterized in that** said first portion (63, 65) of the coupling element (60) comprises a first end (65) insertable into a central hole (120) of a chuck (100), and a collar (63) with holes (62) through which screws (70) are insertable for the fixing to said chuck (100).

## Patentansprüche

1. Verfahren zur Realisierung von geformten Umformungsformen (30) zum Münzen von Münzen mit einem Bildnis (35), umfassend die Verwendung einer zu bildenden Umformungsform (10), die eine Haupterstreckungsrichtung (L) bildet, sowie eine Oberfläche (11), im Wesentlichen rechtwinklig zu der Haupterstreckungsrichtung (L), sowie einen Umformungsstempel (50) in der Form eines Zylinders, wobei eine Basis des Zylinders mittig positive Bildnisreliefs (55) zeigt, die in die Oberfläche (11) einzustempeln sind, wobei das Verfahren **dadurch gekennzeichnet ist, dass** die folgenden aufeinander folgenden Schritte ausgeführt werden:
- Bereitstellung des Umformungsstempels (50) mit:
∘ Einer Vielzahl von negativen Referenzreliefs (51) außerhalb der positiven Bildnisreliefs (55) auf der einen Basis;
o mindestens eine Nut (52) entlang mindestens eines Abschnitts einer Herstellungslinie des Zylinders;
- Kaltwalzen der zu bildenden Umformungsform (10) durch ein Verschiebenlassen des Umformungsstempels (50) innerhalb einer Haltehülse (40), die mit mindestens einer internen Verzahnung (41) versehen ist, auf der die mindestens eine Nut (52) entsprechend gleitet, so dass man eine tonnenförmige Umformungsform (20) erhält, die zu bilden ist mit einer entsprechenden Oberfläche (22), die ein negatives Bildnis (25) und entsprechende positive Referenzreliefs (21) bildet;
- Befestigen eines Kopplungselements (60) an einem Futter (100) einer CNC-Drehmaschine, welches einen ersten Abschnitt (63, 65) präsentiert, der mit dem Futter (100) verbunden werden kann, sowie einen zweiten Abschnitt mit einer Oberfläche, die eine Vielzahl von negativen Referenzreliefs (61) zeigt entsprechend der Vielzahl von positiven Referenzreliefs (21);
- Verbinden der zu formenden tonnenförmigen Umformungsform (20) mit dem Kopplungselement (60) durch Verbinden der positiven Referenzreliefs (21) der zu formenden tonnenförmigen Umformungsform (20) mit den negativen Referenzreliefs (61) des Kopplungselements (60);
- Befestigen der tonnenförmigen Umformungsform durch bewegliche Klemmen des Futters (100);
- Abdrehen der zu formenden tonnenförmigen Umformungsform (20) entlang eines Abschnitts beginnend von einem Ende gegenüber der korrespondierenden Oberfläche (22);
- Verbinden des Endes der zu formenden tonnenförmigen Umformungsform (20) gegenüber der korrespondierenden Seite (22) mit einem Gegenfutter der CNC-Drehmaschine und Entkoppeln der tonnenförmigen Umformungsform (20) von dem Kopplungselement (60) und von dem Futter (100);
- Abdrehen und anschließend Fräsen der zu bildenden tonnenförmigen Umformungsform (20) entlang eines Abschnitts beginnend von der korrespondierenden Seite (22), so dass man eine geformte Umformungsform (30) erhält, die geeignet ist zur Verwendung zum Münzen von Münzen.

2. Verfahren gemäß Anspruch 1, **dadurch gekennzeichnet, dass** das mindestens eine Kopplungselement (60) durch Schrauben (70) an dem Futter (100) befestigt ist durch Löcher (62), die auf dem Kopplungselement (60) vorgesehen sind.

3. Verfahren gemäß Anspruch 1 oder 2, **dadurch gekennzeichnet, dass** die negativen Referenzreliefs (51) in drei korrespondierenden Positionen mit jeweils 120° relativ zueinander angeordnet sind.

4. Verfahren gemäß Anspruch 3, **dadurch gekennzeichnet, dass** es in zwei der drei Positionen nur eine einzige Referenz (21) gibt, während es in einer dritten Position zwei Referenzen (21) gibt in einer solchen Weise, um eine Ausrichtung des entsprechenden Bildnisses (25) zu definieren.

5. Verfahren gemäß einem der Ansprüche 1 bis 4, **dadurch gekennzeichnet, dass** der erste Abschnitt (63, 65) des Kopplungselements (60) ein erstes Ende (65) aufweist, das in eine Zentralbohrung (120) des Futters (100) eingeführt werden kann, sowie einen Kragen (63), der durch Schrauben (70) an dem Futter (100) befestigt werden kann.

6. Prägeanordnung einer zu formenden Umformungsform, **dadurch gekennzeichnet, dass** sie aufweist:
- Einen Umformungsstempel (50) in der Form eines Zylinders, wobei:
o Eine Basis des Zylinders mittig positive Bildnisreliefs (55) zeigt,
o eine Vielzahl von negativen Referenzreliefs (51) außerhalb der positiven Bildnisreliefs (55) auf der Basis vorgesehen ist;
o mindestens eine Nut (52) vorgesehen ist entlang einem Abschnitt einer Herstellungslinie des Zylinders;
- eine Haltehülse (40), die mit mindestens einer internen Verzahnung (41) versehen ist, die geeignet ist, um mit der mindestens einen Nut (52) gleitfähig verbunden zu werden.

7. Kopplungselement (60) für ein Futter (100) und eine zu bildende tonnenförmige Umformungsform (20), **dadurch gekennzeichnet, dass** es einen ersten Abschnitt (63, 65) und einen zweiten Abschnitt (64) zeigt, der eine Kante (61) aufweist, auf der Referenzen (61) im Negativen gebildet sind entsprechend den Referenzen im Positiven (21) auf der tonnenförmigen Umformungsform von Anspruch 1.

8. Kopplungselement gemäß Anspruch 7, **dadurch gekennzeichnet, dass** der erste Abschnitt (63, 65) des Kopplungselements (60) ein erstes Ende (65) aufweist, das in eine Zentralbohrung (120) eines Futters (100) eingeführt werden kann, sowie einen Kragen (63) mit Löchern (62), durch die Schrauben (70) eingeführt werden können zur Befestigung an dem Futter (100).

## Revendications

1. Procédé pour réaliser des matrices de travail mises en forme (30) pour frapper des pièces de monnaie avec une effigie (35), comprenant l'utilisation d'une matrice de travail (10) à former présentant une direction d'extension principale (L) et une face (11) sensiblement perpendiculaire à ladite direction d'extension principale (L), aussi bien qu'un poinçon de travail (50) sous la forme d'un cylindre dans lequel une base du cylindre présente des reliefs d'effigie positifs au centre (55) à poinçonner sur ladite face (11), le procédé étant **caractérisé en ce que** les étapes successives suivantes sont exécutées :
- le fait de munir ledit poinçon de travail (50) :
• d'une pluralité de reliefs de référence négatifs (51) à l'extérieur desdits reliefs d'effigie positifs (55) sur ladite base ;
• d'au moins une rainure (52) le long d'au moins une partie de la ligne génératrice du cylindre ;
- le forçage à froid de ladite matrice de travail (10) à former en faisant coulisser ledit poinçon de travail (50) à l'intérieur d'un manchon de maintien (40) muni d'au moins une dent interne (41) sur laquelle ladite au moins une rainure (52) coulisse de manière correspondante, obtenant ainsi une matrice de travail en forme de barrique (20) à former avec une face correspondante (22) présentant une effigie négative (25) et des reliefs de référence positifs correspondants (21) ;
- la fixation à un mandrin (100) d'un tour à commande numérique par calculateur CNC d'un élément d'accouplement (60), qui présente une première partie (63, 65) qui peut être couplée au mandrin (100) et une seconde partie avec une surface présentant une pluralité de reliefs de référence négatifs (61) correspondant à ladite pluralité de reliefs de référence positifs (21) ;
- le couplage audit élément d'accouplement (60) de ladite matrice de travail en forme de barrique (20) à former en couplant les reliefs de référence positifs (21) de ladite matrice de travail en forme de barrique (20) à former aux reliefs de référence négatifs (61) de l'élément d'accouplement (60) ;
- la fixation de ladite matrice de travail en forme de barrique par des attaches mobiles du mandrin (100) ;
- le tournage de ladite matrice de travail en forme de barrique (20) à former le long d'une partie commençant à une extrémité opposée jusqu'à ladite face correspondante (22) ;
- le couplage de ladite extrémité de la matrice de travail en forme de barrique (20) à former à l'opposé de ladite face correspondante (22) à un contre-mandrin du tour à CNC et le découplage de ladite matrice de travail en forme de barrique (20) depuis ledit élément d'accouplement (60) et depuis le mandrin (100) ;
- le tournage et par la suite le fraisage de la matrice de travail en forme de barrique (20) à former le long d'une partie commençant à ladite face correspondante (22), de façon à obtenir une matrice de travail mise en forme (30) appropriée pour être utilisée pour la frappe de pièces de monnaie.

2. Procédé selon la revendication 1, **caractérisé en ce que** ledit au moins un élément d'accouplement (60) est fixé par des vis (70) audit mandrin (100) à travers des trous (62) réalisés sur ledit élément d'accouplement (60).

3. Procédé selon la revendication 1 ou 2, **caractérisé en ce que** lesdits reliefs de référence négatifs (51) sont disposés en correspondance de trois positions à 120° les unes des autres.

4. Procédé selon la revendication 3, **caractérisé en ce que** dans deux desdites trois positions il y a une seule référence (21), tandis que dans une troisième position il y a deux références (21) de façon à définir une orientation de l'effigie correspondante (25).

5. Procédé selon l'une quelconque des revendications 1 à 4, **caractérisé en ce que** ladite première partie (63, 65) de l'élément d'accouplement (60) comprend une première extrémité (65) pouvant être insérée dans un trou central (120) du mandrin (100), et un collier (63) pouvant être fixé par des vis (70) au mandrin (100).

6. Ensemble de matriçage d'une matrice de travail à former, **caractérisé en ce qu'**il comprend :
- un poinçon de travail (50) sous la forme d'un cylindre, dans lequel :
• une base du cylindre présente des reliefs d'effigie positifs au centre (55),
• une pluralité de reliefs de référence négatifs (51) sont disposés à l'extérieur desdits reliefs d'effigie positifs (55) sur ladite base ;
• au moins une rainure (52) est réalisée le long d'au moins une partie de la ligne génératrice du cylindre ;
- un manchon de maintien (40) muni d'au moins une dent interne (41) appropriée pour être couplée de manière coulissante à ladite au moins une rainure (52).

7. Élément d'accouplement (60) pour le mandrin (100) et matrice de travail en forme de barrique (20) à former, **caractérisé en ce qu'**il présente une première partie (63, 65) et une seconde partie (64) qui a un bord sur lequel des références (61) sont réalisées en négatif, correspondant aux références en positif (21) sur la matrice de travail en forme de barrique de la revendication 1.

8. Élément d'accouplement selon la revendication 7, **caractérisé en ce que** ladite première partie (63, 65) de l'élément d'accouplement (60) comprend une première extrémité (65) pouvant être insérée dans un trou central (120) d'un mandrin (100), et un collier (63) avec des trous (62) à travers lesquels des vis (70) peuvent être insérées pour la fixation audit mandrin (100).
